# EUROPEAN PATENT APPLICATION

(11) **EP 2 733 760 A1**
(43) Date of publication of application: **21.05.2014**
(21) Application number: 11870387.5
(22) Date of filing: 04.08.2011
(51) Int. Cl.: H01L 51/50, H05B 33/14, H05B 37/02

(54) **LIGHTING DEVICE AND LIGHT EMISSION CONTROL METHOD FOR SAME**

(71) Applicant: Pioneer Corporation, Kawasaki-shi, Kanagawa 212-0031 (JP)
(72) Inventor: UCHIDA, Toshiharu, Kawasaki-shi Kanagawa 212-0031 (JP)
(74) Representative: Manitz, Finsterwald & Partner GbR
(86) International application number: PCT/JP2011/067848
(87) International publication number: WO 2013/018222

(57) **Abstract**

A lighting device includes a light-emitting unit having a plurality of light-emitting elements and a control unit that controls the emission of the plurality of light-emitting elements individually. The control unit gradually decreases the luminance of lighted light-emitting elements in a first light-emitting region from among the plurality of light-emitting elements with time and gradually increases the luminance of unlighted light-emitting elements in a second light-emitting region from among the plurality of light-emitting elements with time while maintaining a total luminance of the plurality of light-emitting elements at a set luminance at a set switching time.

## Description

### BACKGROUND OF THE INVENTION

### 1. Field of the Invention

The present invention relates to a lighting device which includes a light-emitting unit having a plurality of light-emitting regions and which is capable of individually controlling emission of each of the plurality of light-emitting regions, and to a light emission control method for the same.

### 2. Description of the Related Art

A lighting device that uses organic electro luminescence (EL) elements as light-emitting sources is proposed. A lighting device (organic EL lighting device) using organic EL elements has characteristics that the lighting device provides field emission and has no shape limitation, and such characteristics are not obtained in other lighting devices such as a light-emitting diode (LED) lighting device. Thus, a further development toward practical use in the future is expected.

In an organic EL lighting device, since organic EL elements are often left in a lighted state for a long period for the purpose of lighting, the organic EL elements themselves generate heat and enter into a high temperature state. However, it is known that, if the high temperature state of the organic EL elements is continued for a long period, deterioration of the organic EL elements is accelerated to decrease the luminance thereof, and as a result, the life of the elements shortens.

In general, in order to extend the service life of light-emitting elements such as LED of a lighting device, a method in which a plurality of light-emitting elements is prepared and a half number of light-emitting elements and the remaining light-emitting elements are alternately lighted is proposed (for example, see Patent Document 1). Thus, by applying this method to the organic EL lighting device, it is possible to extend the service life of organic EL elements.

Patent Document 1: Japanese Patent Application Publication No. 2008-166065

### SUMMARY OF THE INVENTION

However, in a lighting device such as an organic EL lighting device, since flickering occurs instantly, for example, when a lighted light-emitting element and an unlighted light-emitting element are switched, there is a problem in that the user of the lighting device recognizes the switching and feels a sense of strangeness.

Thus, the above-mentioned drawbacks are examples of problems to be solved by the present invention, and an object of the present invention is to provide a lighting device and a light emission control method capable of switching a lighted light-emitting element and an unlighted light-emitting element of a light-emitting unit without being recognized by the user of the lighting device.

A lighting device of the present invention according to claim 1 is a lighting device including: a light-emitting unit having a plurality of light-emitting elements; and a control unit controlling emission of the plurality of light-emitting elements individually, wherein the control unit gradually decreases the luminance of lighted light-emitting elements in a first light-emitting region from among the plurality of light-emitting elements with time and gradually increases the luminance of unlighted light-emitting elements in a second light-emitting region from among the plurality of light-emitting elements with time while maintaining a total luminance of the plurality of light-emitting elements at a set luminance at a set switching timing.

A light emission control method of the present invention according to claim 11 is a light emission control method for a lighting device that includes a light-emitting unit having a plurality of light-emitting elements, including: a first step of controlling the emission of the plurality of light-emitting elements individually; and a second step of gradually decreasing the luminance of lighted light-emitting elements of a first light-emitting region among the plurality of light-emitting elements with time and gradually increasing the luminance of unlighted light-emitting elements of a second light-emitting region among the plurality of light-emitting elements with time while maintaining a total luminance of the plurality of light-emitting elements at a set luminance at a set switching timing.

### DETAILED DESCRIPTION OF THE INVENTION

According to the lighting device of the present invention according to claim 1 and the light emission control method of the present invention according to claim 11, when the lighted light-emitting elements and the unlighted light-emitting elements of the light-emitting unit are switched, the luminance of the lighted light-emitting elements of the first light-emitting region among the plurality of light-emitting elements is gradually decreased with time and the luminance of the unlighted light-emitting elements of the second light-emitting region among the plurality of light-emitting elements is gradually increased with time while maintaining the total luminance of the plurality of light-emitting elements of the light-emitting unit at the set luminance at the set switching timing. Thus, the switching of the lighted light-emitting elements and the unlighted light-emitting elements of the light-emitting unit is executed gradually with time without changing the total luminance of the light-emitting unit. As a result, it is possible to execute the switching of the light-emitting elements of the light-emitting region and the light-emitting elements of the unlighted light-emitting region without giving a sense of strangeness such as flickering to the user of the lighting device during the switching. Moreover, the respective light-emitting elements are prevented from being left in a high temperature state for a long period. Further, since a remarkable progress in deterioration of some light-emitting elements of the light-emitting unit as compared to the other light-emitting elements is obviated, it is possible to extend the service life of the light-emitting unit having the plurality of light-emitting elements.

### BRIEF DESCRIPTION OF THE DRAWINGS

Fig. 1 is a block diagram illustrating a configuration of a lighting device as an embodiment of the present invention.
Fig. 2 is a plan view illustrating four regions of a light-emitting surface of the lighting device illustrated in Fig. 1.
Fig. 3 is a flowchart illustrating a control operation of the lighting device illustrated in Fig. 1.
Fig. 4 is a diagram illustrating a switching time at which a lighted light-emitting region and an unlighted light-emitting region are switched.
Fig. 5 is a block diagram illustrating a configuration of a lighting device as another embodiment of the present invention.
Fig. 6 is a flowchart illustrating a control operation of the lighting device illustrated in Fig. 5.
Fig. 7 is a diagram illustrating a light-emitting surface having grid-shaped light-emitting regions in which lighted light-emitting regions and unlighted light-emitting regions form a checkered pattern.
Fig. 8 is a diagram illustrating a light-emitting surface having concentric light-emitting regions in which lighted light-emitting regions and unlighted light-emitting regions are located alternately in a radial direction.

### EMBODIMENTS

Hereinafter, embodiments of the present invention will be described in detail with reference to the drawings.

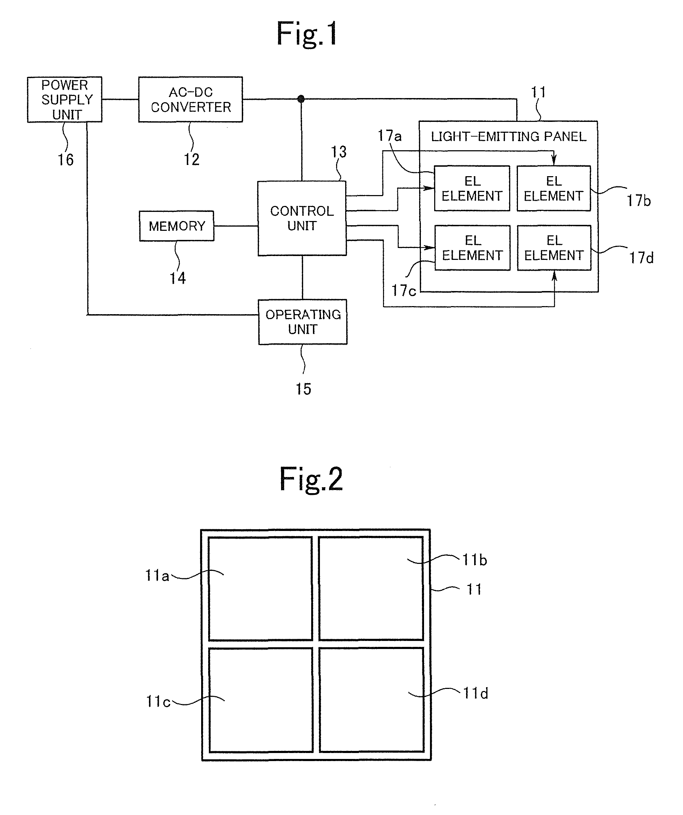

Fig. 1 illustrates a configuration of a lighting device which is an embodiment of the present invention. This lighting device includes a light-emitting panel unit 11 (light-emitting unit) that includes organic EL elements as light-emitting elements. The light-emitting panel unit 11 is a surface-emitting panel and has a square light-emitting surface which is evenly divided into four regions 11a to 11d as illustrated in Fig. 2. This division corresponds to grouping of a plurality of organic EL elements provided in the light-emitting panel unit 11. In this embodiment, although, for better understanding of the present invention, it is assumed that the region 11a has an organic EL element 17a, the region 11b has an organic EL element 17b, the region 11c has an organic EL element 17c, and the region 11d has an organic EL element 17d, each region may have a plurality of organic EL elements. Further, in this embodiment, although the four regions 11a to 11d have a square shape, these regions may have other shapes such as a triangular shape or a circular shape and may not be divided evenly.

The lighting device includes an AC-DC converter 12, a control unit 13, a memory 14, and an operating unit 15. The AC-DC converter 12 converts an AC voltage from a power supply unit 16 into a DC voltage and outputs the DC voltage. The power supply unit 16 is a commercial power source, for example. The output voltage of the AC-DC converter 12 is supplied to the light-emitting panel unit 11 and the control unit 13 as a DC power supply voltage. The control unit 13 is configured as a CPU, for example, and controls emission for each of the regions 11a to 11d of the light-emitting panel unit 11.

The memory 14 and the operating unit 15 as well as the light-emitting panel unit 11 are connected to the control unit 13. Programs and data required for the control of the control unit 13 are stored in the memory 14. The operating unit 15 sets the luminance of the entire light-emitting panel unit 11 in accordance with an operation input by the user. The operating unit 15 can set the luminance arbitrarily within a predetermined luminance range. Moreover, the operating unit 15 is provided with a power on/off switch for turning on and off the lighting device. When the power on/off switch is turned on, the power supply voltage of the power supply unit 16 is supplied to the AC-DC converter 12. When the power on/off switch is turned off, the supply of the power supply voltage of the power supply unit 16 to the AC-DC converter 12 is blocked. In this embodiment, the luminance set by the operating unit 15 will be referred to a set luminance.

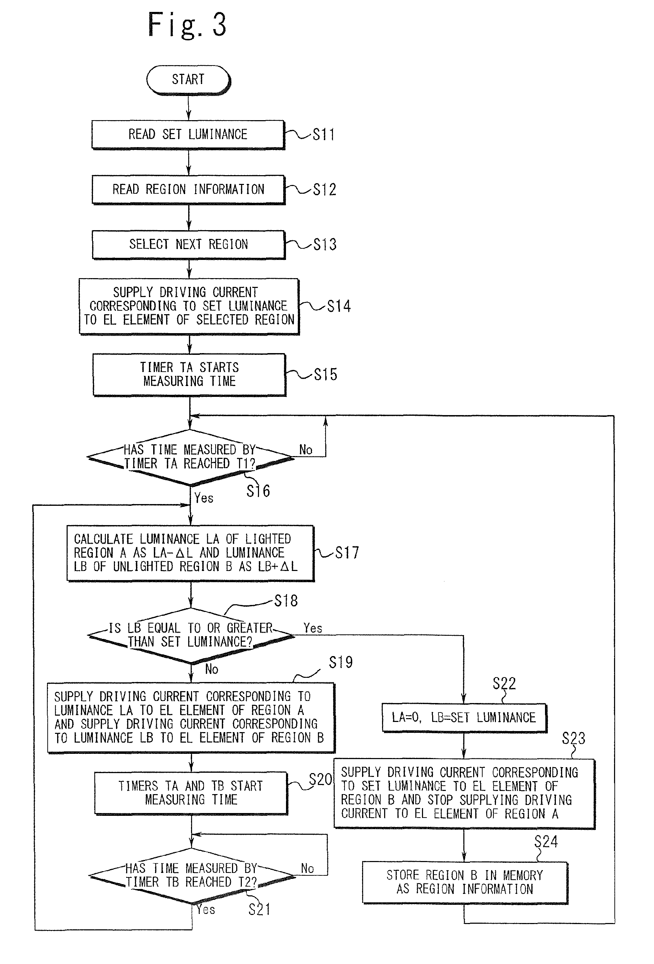

Next, the control operation of the lighting device having such a configuration will be described with reference to the flowchart of Fig. 3.

In accordance with the output voltage of the AC-DC converter 12, the control unit 13 starts a control operation when the power on/off switch of the operating unit 15 is turned on. First, the control unit 13 reads a set luminance set by the operating unit 15 (step S11) and reads previously selected region information from the memory 14 (step S12). A next region subsequent to a region indicated by the region information read in step S12 is selected from among the four regions 11a to 11d (step S13).

The organic EL elements of two regions among the four regions 11a to 11d are used for light emission. The regions are selected, for example, in an order where the regions 11a and 11d and the regions 11b and 11c are repeatedly selected. If the regions read in step S12 are the regions 11a and 11d, the regions 11b and 11c are selected in step S13.

When new regions are selected in step S13, the control unit 13 controls the selected regions so as to emit light at a set luminance (step S14). In step S14 as a first step, a driving current corresponding to the set luminance read in step S11 is supplied to organic EL elements belonging to the selected two regions. The driving current is controlled so that only the organic EL elements of the selected two regions emit light at the set luminance. For example, since the luminance of the two regions is obtained by multiplying a luminance per unit area with the area of the two regions, when the relation between the luminance per unit area and the driving current value is determined, the driving current value corresponding to the set luminance can be determined for each area of the two regions that are to be put into a lighted state. It is assumed that the relation between the luminance and the driving current of each organic EL element when the organic EL elements of two regions are driven is stored in advance in the control unit 13 as data, and the driving current is controlled using the data.

After step S14 is executed, the control unit 13 causes a timer TA (not illustrated) to start measuring time (step S15). The timer TA is a timer that measures a first predetermined period T1. The first predetermined period T1 is not particularly limited but is two hours, for example. Moreover, the first predetermined period T1 may be a period in which it is expected that after the two regions selected in step S13 start emitting light, the temperature of the organic EL elements of the regions reaches approximately a predetermined switching temperature. After step S15 is executed, the control unit 13 determines whether the time measured by the timer TA has reached the first predetermined period T1 (step S16).

When it is determined that the measured time has reached the first predetermined period T1, the control unit 13 decreases the luminance LA of the two lighted regions (referred to as region A corresponding to a first light-emitting region) among the regions 11a to 11d by a luminance variation ΔL and increases the luminance LB of the other two unlighted regions (referred to as region B corresponding to a second light-emitting region) by the luminance variation ΔL (step S17). An initial value of the luminance LA is the set luminance, and the initial value of the luminance LB is 0. The luminance variation ΔL is a luminance that is sufficiently smaller than the set luminance. In step S17, LA=LA-ΔL and LB=LB+ΔL are calculated. Moreover, it is determined whether the luminance LB is equal to or larger than the set luminance (step S18). If the luminance LB is smaller than the set luminance, the calculation results of step S17 are maintained. As a result, the driving current of the organic EL elements of the region A is controlled so that only the organic EL elements of the region A emit light at the luminance LA, and the driving current of the organic EL elements of the region B is controlled so that only the organic EL elements of the region B emit light at the luminance LB (step S19).

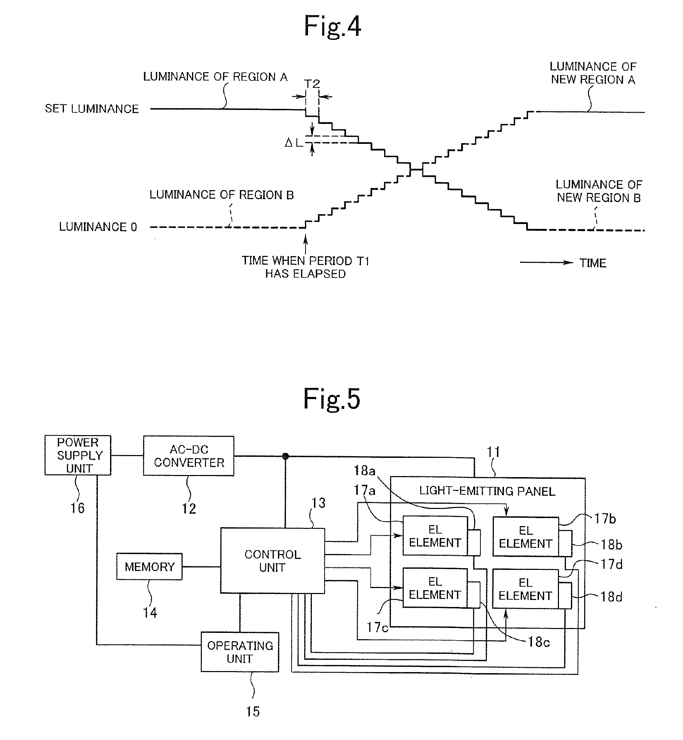

After step S19 is executed, the control unit 13 causes the timers TA and TB (not illustrated) to start measuring time (step S20). The timer TB is a timer that measures a second predetermined period T2. The second predetermined period T2 is a period that is sufficiently shorter than the first predetermined period and is ten seconds, for example. After step S20 is executed, the control unit 13 determines whether the time measured by the timer TB has reached the second predetermined period T2 (step S21). When it is determined that the time measured by the timer TB has reached the second predetermined period T2, the control unit 13 executes step S17 again. By repeating steps S17 to S21, as illustrated in Fig. 4, the luminance of the region A decreases from the set luminance by the luminance variation ΔL and the luminance of the region B increases from 0 by the luminance variation ΔL every second predetermined period T2.

If it is determined in step S18 that the luminance LB is equal to or larger than the set luminance, the control unit 13 determines that LA=0 and LB=set luminance are established (step S22). When the luminance LA and LB is set in this manner, the driving current of the organic EL elements of the region B is controlled so that only the organic EL elements of the region B emit light at the luminance LB (=set luminance) and the supply of the driving current to the organic EL elements of the region A is stopped so that the region A enters into an unlighted state (step S23).

By executing steps S17 to S23 corresponding to a second step, as illustrated in Fig. 4, the luminance of the region A decreases from the set luminance by the luminance variation ΔL and the luminance of the region B increases from 0 by the luminance variation ΔL every second predetermined period T2. Finally, the luminance of the region A reaches 0 and the luminance of the region B reaches the set luminance. Moreover, the total luminance of the regions A and B when the luminance varies every second predetermined period T2 is always maintained at the set luminance. A total period for the switching may be approximately 5 minutes to 10 minutes.

After step S23 is executed, the control unit 13 writes information indicating the region B into the memory 14 as the selected region information (step S24), and then, executes step S16 again. The contents written in step S24 are read when the control unit 13 executes step S12 immediately after the power on/off switch is subsequently turned on from an off state. Moreover, after step S24, the present region B becomes a new lighted region A, and the present region A becomes a new unlighted region B.

As described above, in this embodiment, a region including the regions 11a and 11d and a region including the regions 11b and 11c among the four regions 11a to 11d of the light-emitting panel unit 11 are caused to emit light while being switched every first predetermined period T1. For example, if the region including the regions 11a and 11d is the lighted region A and the region including the regions 11b and 11c is the unlighted region B immediately before the switching, the luminance of the regions 11a and 11d gradually decreases and the luminance of the regions 11b and 11c gradually increases during the switching, and the total luminance of the luminance of the regions 11a and 11d and the luminance of the regions 11b and 11c is set to the set luminance. As a result, the regions 11a and 11d enter into the unlighted state and the set luminance is obtained by the emission of the regions 11b and 11c only. Immediately before the next switching, the region including the regions 11a and 11d becomes the unlighted region B and the region including the regions 11b and 11c becomes the lighted region A, and the switching operation is similarly performed so that the luminance gradually varies.

The regions 11a to 11d of the light-emitting panel unit 11 are caused to emit light so that the lighted light-emitting region and the unlighted light-emitting region are switched every first predetermined period T1. Therefore, the organic EL elements of the light-emitting panel unit 11 can be prevented from being left in a high temperature state for a long period, and as a result, the service life of the organic EL elements can be extended. Moreover, during the switching, the luminance of the organic EL element of the lighted light-emitting region is gradually decreased, the luminance of the organic EL element of the unlighted light-emitting region is gradually increased, and the total luminance thereof is maintained at the set luminance. Thus, such a change such as flickering that can be recognized by the user of the lighting device does not occur during the switching. Therefore, it is possible to switch the lighted light-emitting region and the unlighted light-emitting region without giving a sense of strangeness to the user.

The first predetermined period T1 can be set by taking an ambient temperature into consideration. For example, the higher the ambient temperature, the shorter the first predetermined period T1 may be set.

It is known that, when the operating environment temperature of the lighting device is 26°C and the operating temperature of the light-emitting panel unit is 60°C, the service life of the light-emitting panel unit decreases by approximately 1/4. If the operating temperature reaches the glass transition temperature (80°C or higher) of the organic EL material, the service life is expected to decrease remarkably. Moreover, it is expected that the higher the operating temperature, the more the light emission efficiency deteriorates. Thus, by switching the lighted light-emitting element and the unlighted light-emitting element of the light-emitting unit in the above-described manner, the respective light-emitting elements are prevented from being left in the high temperature state for a long period. Further, since a remarkable progress in deterioration of some light-emitting elements of the light-emitting unit as compared to the other light-emitting elements is obviated, it is possible to extend the service life of the light-emitting unit having the plurality of light-emitting elements.

Fig. 5 illustrates a configuration of a lighting device which is another embodiment of the present invention. The lighting device illustrated in Fig. 5 includes temperature sensors 18a to 18d that detect the temperatures of organic EL elements 17a to 17d of respective regions 11a to 11d. The output of the respective temperature sensors 18a to 18d is connected to a control unit 13. Since the other components are the same as the components of the lighting device illustrated in Fig. 1 and are denoted by the same reference numerals, the description thereof will not be provided here.

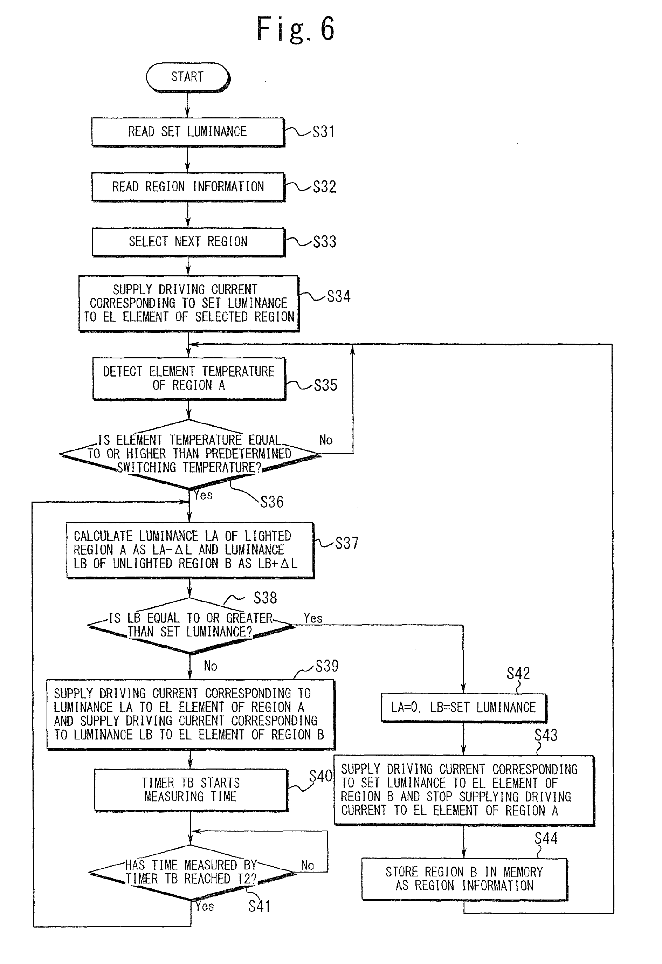

Next, a control operation of the lighting device having the configuration illustrated in Fig. 5 will be described with reference to the flowchart of Fig. 6.

When the control operation starts, the control unit 13 executes the same steps S31 to S34 as steps S11 to S14 of the flowchart of Fig. 3 so that the driving current corresponding to the read set luminance is supplied to organic EL elements belonging to two regions selected among the regions 11a to 11d.

After step S34 is executed, the temperatures of the temperature sensors (for example, the temperature sensors 18a and 18d if the regions 11a and 11d are selected) corresponding to the selected two regions (the lighted region A) are detected (step S35). Then, it is determined whether at least one of the temperatures detected by the temperature sensors is equal to or higher than a predetermined switching temperature (step S36). That is, it is determined whether the temperature of the organic EL element of each of the selected two regions is equal to or higher than the switching temperature. The predetermined switching temperature is a temperature that is slightly lower than an element temperature (for example, 80°C) at which it is expected that deterioration of an organic EL element progresses abruptly, for example, and is determined in accordance with temperature characteristics of the element.

When it is determined that at least one of the temperatures detected by the temperature sensors is equal to or higher than the predetermined switching temperature, the control unit 13 decreases the luminance LA of the two lighted regions (referred to as region A) among the regions 11a to 11d by a luminance variation ΔL and increases the luminance LB of the other two unlighted regions (referred to as region B) by the luminance variation ΔL (step S37). Moreover, it is determined whether the luminance LB is equal to or larger than the set luminance (step S38). If the luminance LB is smaller than the set luminance, the calculation results of step S37 are maintained. As a result, the driving current of the organic EL elements of the region A is controlled so that only the organic EL elements of the region A emit light at the luminance LA, and the driving current of the organic EL elements of the region B is controlled so that only the organic EL elements of the region B emit light at the luminance LB (step S39).

After step S39 is executed, the control unit 13 causes a timer TB to start measuring time (step S40). The timer TB is a timer that measures a second predetermined period T2. After step S40 is executed, the control unit 13 determines whether the time measured by the timer TB has reached the second predetermined period T2 (step S41). When it is determined that the time measured by the timer TB has reached the second predetermined period T2, the control unit 13 executes step S37 again. By repeating steps S37 to S41, the luminance of the region A decreases from the set luminance by the luminance variation ΔL and the luminance of the region B increases from 0 by the luminance variation ΔL every second predetermined period T2.

If it is determined in step S41 that the luminance LB is equal to or larger than the set luminance, the control unit 13 determines that LA=0 and LB=set luminance are established (step S42). When the luminance LA and LB is set in this manner, the driving current of the organic EL elements of the region B is controlled so that only the organic EL elements of the region B emit light at the luminance LB (=set luminance) and the supply of the driving current to the organic EL elements of the region A is stopped so that the region A enters into an unlighted state (step S43).

After step S43 is executed, the control unit 13 writes the region B into the memory 14 as the selected regions (step S44), and then, executes step S35 again. These steps are the same as steps S17 to S24 of the flowchart of Fig. 3. Moreover, after step S44, the present region B becomes a new lighted region A, and the present region A becomes a new unlighted region B.

As described above, in the lighting device illustrated in Fig. 5, a region including the regions 11a and 11d and a region including the regions 11b and 11c among the four regions 11a to 11d of the light-emitting panel unit 11 are caused to emit light while being switched whenever the temperature of organic EL elements of a lighted region reaches the predetermined switching temperature. For example, if the region including the regions 11a and 11d is the lighted region A and the region including the regions 11b and 11c is the unlighted region B immediately before the switching, the luminance of the regions 11a and 11d gradually decreases and the luminance of the regions 11b and 11c gradually increases during the switching, and the total luminance of the luminance of the regions 11a and 11d and the luminance of the regions 11b and 11c is set to the set luminance. Eventually, the regions 11a and 11d enter into the unlighted state and the set luminance is obtained by the emission of the regions 11b and 11c only. Immediately before the next switching, the region including the regions 11a and 11d becomes the unlighted region B and the region including the regions 11b and 11c becomes the lighted region A, and the switching operation is similarly performed so that the luminance gradually varies.

The lighted light-emitting region and the unlighted light-emitting region are switched whenever the temperature of the organic EL elements of the lighted region of the light-emitting panel unit 11 reaches the predetermined switching temperature. Therefore, the organic EL elements of the light-emitting panel unit 11 can be prevented from being left in a high temperature state for a long period, and as a result, the service life of the organic EL elements can be extended. Moreover, during the switching, the luminance of the organic EL element of the lighted light-emitting region is gradually decreased, the luminance of the organic EL element of the unlighted light-emitting region is gradually increased, and the total luminance thereof is maintained at the set luminance. Thus, such a change such as flickering that can be recognized by the user of the lighting device does not occur during the switching. Therefore, it is possible to switch the lighted light-emitting region and the unlighted light-emitting region without giving a sense of strangeness to the user.

In the respective embodiments described above, although the luminance of the regions A and B is gradually changed at the rate of the luminance variation ΔL every predetermined period T2 during the switching, the luminance of the regions A and B may naturally be changed continuously.

Moreover, in the above-described embodiments, although the light-emitting surface of the light-emitting panel unit 11 is divided in advance into the regions 11a to 11d, the present invention is not limited to this, and a single continuous light-emitting surface may be divided into organic EL elements of a lighted light-emitting region and organic EL elements of an unlighted light-emitting region under the control of the control unit 13.

Further, in the above-described embodiments, although the regions 11a to 11d of the light-emitting panel unit 11 are controlled by dividing the same into the two regions A and B corresponding to the first and second light-emitting regions for the sake of control, the regions 11a to 11d may be controlled by dividing the same into a plurality of regions other than two regions. For example, when the regions 11a to 11d are controlled by dividing the same into four regions, the regions may be switched in the order of 11a, 11b, 11c, and 11d.

Further, in the above-described embodiments, although the set luminance is determined according to an operation on the operating unit 15, the set luminance may be a fixed luminance determined in advance.

Further, in the above-described embodiments, although organic EL elements are used as the light-emitting elements of the light-emitting unit, the present invention is not limited to this, and other light-emitting elements such as inorganic EL elements may be also used.

The gradual variation of the luminance as used in the present invention means that the luminance is changed at such a rate that the user of the lighting device does not recognize the variation. For example, if a lighting device is lighted while switching a lighted light-emitting region and an unlighted light-emitting region having a checkered pattern and the user of the lighting device is doing clerical work at a desk, such a result is obtained that the user is likely to recognize the switching if the switching period from the start and the completion of the switching is shorter than five minutes and the user can hardly recognize the switching if the switching period is five minutes or longer. That is, it is preferable that the luminance of the lighting device is changed at a rate lower than such a luminance change rate that the switching can be recognized so as to correspond to the switching period.

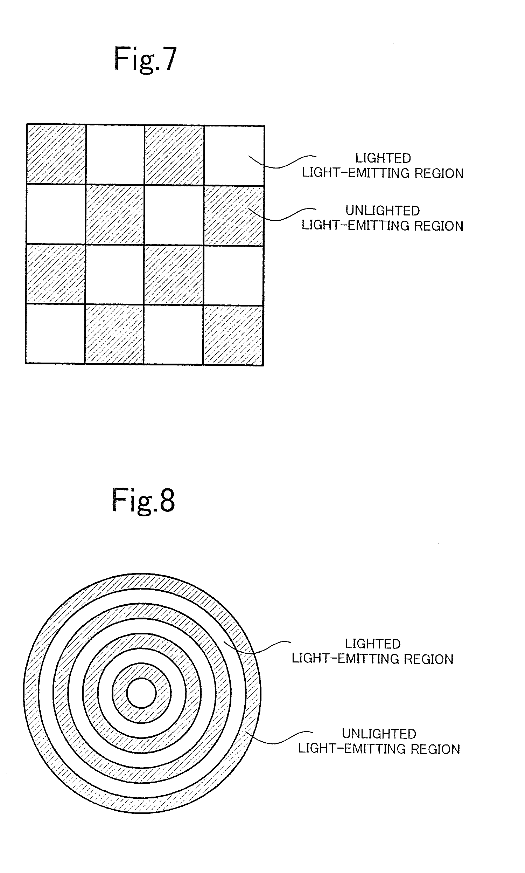

In the above-described embodiments, although organic EL elements are used as the light-emitting elements of the light-emitting unit, since a light-emitting intensity distribution curve of organic EL elements is approximately equal to that of a perfect reflecting diffuser unlike other light-emitting elements such as light-emitting diodes (LEDs), the organic EL elements do not have directivity. Thus, the use of the light-emitting unit having organic EL elements provides advantages that the user can hardly recognize the switching of the lighted light-emitting region and the unlighted light-emitting region. Moreover, since the organic EL elements are surface light sources, the user is less likely recognize the switching on account of these surface light sources than point sources such as fluorescent lamps or LEDs in which high-luminance portions are concentrated. Further, the luminance of the organic EL element can be continuously changed smoothly from low luminance to high luminance as compared to other light-emitting elements, the organic EL elements are ideal as light-emitting elements for gradually varying the luminance. Further, since the organic EL elements provide a high degree of freedom in the shape of light-emitting regions as compared to other light-emitting elements, it is possible to realize such a shape that the user can rarely recognize the switching of the lighted light-emitting region and the unlighted light-emitting region. For example, as illustrated in Fig. 7, light-emitting regions may be formed in a grid shape on a light-emitting surface so that the lighted light-emitting region and the unlighted light-emitting region are arranged to form a checkered pattern. Moreover, as illustrated in Fig. 8, light-emitting regions divided by concentric circles may be formed on a light-emitting surface so that the lighted light-emitting region and the unlighted light-emitting region are located alternately in the radial direction.

As illustrated in Figs. 7 and 8, when the plurality of light-emitting regions of the lighting device is fine, the switching is rarely recognized even if the switching period is short. When the plurality of light-emitting regions is coarse, the switching is likely to be recognized unless the switching period is increased. For example, if a plurality of light-emitting regions is arranged on a straight line and the lighted light-emitting regions are switched in an arrangement order, the switching is likely to be recognized apparently. In contrast, when a plurality of light-emitting regions (light-emitting elements) is arranged as illustrated in Figs. 7 and 8, it is possible to change the switching rate according to an arrangement of the plurality of light-emitting regions. That is, even when the switching rate is increased (the switching period is shortened), the switching will be rarely recognized. The merit of shortening the switching period is the ability to maintain a low emission temperature since finer control can be realized.

Further, in the above-described embodiments, the switching occurs, for example, when the lighted state has continued for the predetermined period T1 or when the temperature of the organic EL elements has reached the predetermined switching temperature, but the switching may occur when no person is present in a lighting range of a room or the like where the lighting device is installed or when the number of present persons is smaller than a predetermined number. For example, a human detection sensor for detecting the presence of a person in a lighting range of the lighting device may be provided so that switching of the lighted light-emitting region and the unlighted light-emitting region starts when the output of the human detection sensor indicates that no person is present in the lighting range.

Further, the light-emitting panel unit 11, the AC-DC converter 12, the control unit 13, the memory 14, and the operating unit 15 in the above-described embodiments may be received in a casing (not illustrated) of the lighting device, and alternatively, other units such as the control unit 13 and the operating unit 15 may be separated from the light-emitting panel unit 11.

- 11:: Light emitting panel unit
- 12:: AC-DC converter
- 13:: Control unit
- 14:: Memory
- 15:: Operating unit
- 16:: Power supply unit
- 17a to 17d:: Organic EL element
- 18a to 18d:: Temperature sensor

## Claims

1. A lighting device comprising:
a light-emitting unit having a plurality of light-emitting elements; and
a control unit individually controlling emission of each of the plurality of light-emitting elements, wherein
the control unit gradually decreases the luminance of lighted light-emitting elements in a first light-emitting region from among the plurality of light-emitting elements with time and gradually increases the luminance of unlighted light-emitting elements in a second light-emitting region from among the plurality of light-emitting elements with time while maintaining a total luminance of the plurality of light-emitting elements at a set luminance at a set switching timing.

2. The lighting device according to claim 1, wherein
the control unit sets predetermined intervals of time as the switching timing.

3. The lighting device according to claim 1, further comprising:
a temperature detection element detecting a temperature of the light-emitting elements in the first light-emitting region, wherein
the control unit sets a time when the temperature of the light-emitting elements in the first light-emitting region detected by the temperature detection element reaches a predetermined switching temperature as the switching timing.

4. The lighting device according to claim 1, comprising:
a human detection element detecting the presence of a human in a lighting range of the lighting device, wherein
the control unit sets a time when the presence of a human is not detected by the human detection element or a time when the number of humans which are present is smaller than a predetermined number as the switching timing.

5. The lighting device according to any one of claims 1 to 4, wherein
the control unit changes the luminance of the light-emitting elements in each of the first and second light-emitting regions at a switching rate that is lower than a luminance change rate at which a user of the lighting device can recognize a change in the luminance of the light-emitting unit.

6. The lighting device according to claim 5, wherein
the control unit changes the switching rate in accordance with an arrangement of the plurality of light-emitting elements.

7. The lighting device according to any one of claims 1 to 6, wherein
when the luminance of the light-emitting elements in the first light-emitting region is decreased gradually with time, the control unit controls the light-emitting elements in the first light-emitting region into an unlighted state and controls the light-emitting elements in the second light-emitting region into a lighted state at the set luminance after the elapse of a switching period.

8. The lighting device according to claim 1, comprising:
an operating unit that sets a luminance in accordance with an input operation, wherein
the set luminance is a luminance set by the operating unit.

9. The lighting device according to any one of claims 1 to 8, wherein
the set luminance is a fixed luminance that is determined in advance.

10. The lighting device according to any one of claims 1 to 9, wherein
the light-emitting elements are organic electro luminescence elements.

11. A light emission control method for a lighting device that includes a light-emitting unit having a plurality of light-emitting elements,
the method comprising:
a first step of individually controlling emission of each of the plurality of light-emitting elements; and
a second step of gradually decreasing the luminance of lighted light-emitting elements in a first light-emitting region from among the plurality of light-emitting elements with time and gradually increasing the luminance of unlighted light-emitting elements in a second light-emitting region from among the plurality of light-emitting elements with time while maintaining a total luminance of the plurality of light-emitting elements at a set luminance at a set switching timing.
